# EUROPÄISCHE PATENTSCHRIFT

(11) **EP 2 803 432 B1**
(45) Veröffentlichungstag und Bekanntmachung des Hinweises auf die Patenterteilung: **08.07.2015**
(21) Anmeldenummer: 13167419.4
(22) Anmeldetag: 13.05.2013
(51) Int. Cl.: B23B 29/04, B23B 27/08, B23B 31/30

(54) **Werkzeug, insbesondere für die spanabhebende Werkstückbearbeitung**
Tool, in particular for the machining of workpieces
Outil, notamment pour l'usinage de pièces à enlèvement de copeaux

(43) Veröffentlichungstag der Anmeldung: 19.11.2014
(73) Patentinhaber: Baum GmbH Zerspanungstechnik & Werkzeugbau, 33142 Büren-Brenken (DE)
(72) Erfinder: Baum, Thomas, 33142 Büren-Brenken (DE); Baum, Norbert, 33142 Büren-Brenken (DE); Schreckenberg, Andreas, 33142 Büren-Brenken (DE)
(74) Vertreter: Ter Meer Steinmeister & Partner

(56) Entgegenhaltungen:
- DE-A1- 1 913 481
- DE-A1-102010 008 187
- JP-A- H08 206 901
- US-A- 2 963 298
- US-A- 3 566 506
- US-A- 4 801 224

## Beschreibung

Die vorliegende Erfindung betrifft ein Werkzeug, insbesondere für die spanabhebende Werkstückbearbeitung.

Derartige Werkzeuge sind schon seit längerer Zeit in verschiedenen Ausführungsformen bekannt. Sie umfassen einen Werkzeughalter, in welchem ein Schneideinsatz aufgenommen und darin verspannt ist. Der Schneideinsatz kann als Schneidplatte für ein Einstechund Abstechwerkzeug oder auch als Schlitz- oder Trennfräser ausgeführt sein. Denkbar ist allerdings auch, dass der Schneideinsatz im Rahmen der vorliegenden Erfindung selbst einen Halter für eine auswechselbare Schneide darstellt.

Der Schneideinsatz ist in eine schlitzförmige Ausnehmung im Halter eingesetzt und darin so eingespannt, dass er bei der Werkstückbearbeitung sicher in einer definierten Position gehalten wird. Es muss allerdings möglich bleiben, den Schneideinsatz nach Bedarf problemlos auswechseln zu können. Der Halter kann zu diesem Zweck mit geeigneten Spanneinrichtungen ausgestattet sein, die einfach zu lösen sind. Beispielsweise zeigt die US-A-4,801,224 eine Klemmvorrichtung, die den Schneideinsatz durch Federkraft hält. Zum Auswechseln des Schneideinsatzes muss die Ausnehmung gegen die Federkraft aufgespreizt werden. Je größer diese Kraft ist, desto mühsamer ist der Auswechselvorgang. Andererseits muss die Federkraft aber groß genug sein, um den Schneideinsatz sicher in der Ausnehmung zu halten. Dieser Zielkonflikt ist nicht immer ohne weiteres zu lösen.

Zudem wird bei derartigen Klemmvorrichtungen der Schneideinsatz lediglich an drei verschiedenen Klemmpunkten gehalten, was dazu führt, dass der Schneideinsatz innerhalb der Ausnehmung verkippen kann. Schließlich stellt eine solche mechanische Klemmung besondere Anforderungen an die Gestaltung der Klemmbacken, die den Schneideinsatz beidseitig halten und zwischen denen die Ausnehmung angeordnet ist, um die notwendige Elastizität zu gewährleisten. Die Ausnehmung selbst muss aus diesem Grund eine ausreichende Länge aufweisen und sich relativ weit in den Halter hinein erstrecken. Diese Erfordernisse schränken eine freie Gestaltbarkeit des Halters ein.

Dokument DE 10 2010 008 187 A1 offenbart ein Werkzeug gemäß dem Oberbegriff des Anspruchs 1.

Es ist daher eine Aufgabe der vorliegenden Erfindung, ein Werkzeug der eingangs beschriebenen Art zu schaffen, bei welchem sich der Schneideinsatz einfacher auswechseln lässt als bei den bekannten Klemmvorrichtungen, wobei der Schneideinsatz dennoch sicher in einer festgelegten Position in der schlitzförmigen Ausnehmung gehalten wird. Eine weitere Aufgabe besteht in der Schaffung eines Werkzeugs mit einem Halter, dessen Gestaltung nicht den vorstehend genannten Einschränkungen unterliegt.

Diese Aufgaben werden erfindungsgemäß durch ein Werkzeug mit den Merkmalen des Anspruchs 1 gelöst.

Die Ausnehmung wird seitlich zumindest teilweise durch ein elastisch verformbares Druckelement begrenzt, bei welchem es sich beispielsweise um ein Metallblech oder eine anders geartete druckdichte Membran handeln kann. Dieses folienartige Druckelement liegt flächig am Schneideinsatz an und lässt sich auf seiner Rückseite, d.h. auf der der Kontaktfläche zum Schneideinsatz gegenüberliegenden Seite mittels eines Druckfluids mit Druck beaufschlagen.

Durch diesen Druck wird das Druckelement verformt und über eine relativ große Fläche gegen den Schneideinsatz gedrückt. Hierdurch kann eine punktuelle mechanische Belastung des Schneideinsatzes vermieden werden. Vielmehr führt der ausgeübte Flächendruck auf den Schneideinsatz dazu, dass letzterer sicher in der schlitzförmigen Ausnehmung gehalten wird und nicht ohne weiteres aus dieser herausgezogen werden kann oder auf andere Weise seine Position in der Ausnehmung ändern kann. Die Geometrie der Ausnehmung kann relativ einfach gestaltet sein, z.B. als Schlitz mit gegenüberliegenden parallelen Wänden, wobei in einer der Wände das Druckelement vorgesehen ist.

Zum Auswechseln des Schneideinsatzes wird einfach das Druckelement entspannt, d.h. der an seiner Rückseite anliegende Druck wird abgesenkt, bis der Schneideinsatz einfach aus der Ausnehmung herausgezogen werden kann. Nach dem Wechsel wird der neue Schneidensatz wieder im Halter verspannt, indem der rückseitig am Druckelement anliegende Druck wieder erhöht wird. Der Körper des Halters selbst, in dessen Ausnehmung das Druckelement angebracht ist, muss also zum Auswechseln des Schneideinsatzes nicht verformt werden. Für den Wechselvorgang ist daher kein Spreizwerkzeug erforderlich. Da eine elastische Verformung der Spannbacken beiderseits des Schneideinsatzes nicht erforderlich ist, kann der Halter im Bereich der Ausnehmung relativ frei gestaltet werden.

Das Werkzeug umfasst eine im Halter angeordnete Druckkammer, die durch das Druckelement von der Ausnehmung getrennt ist und das Druckfluid enthält. Die Druckkammer kann jede beliebige geeignete Form haben und ist vorteilhafterweise so ausgebildet, dass eine relativ große Fläche der Rückseite des Druckelements gleichförmig mit dem Druckfluid beaufschlagt wird, so dass der Druck gleichmäßig verteilt wird. Bei dem Druckfluid kann es sich beispielsweise um ein flüssiges Druckfluid handeln, wie etwa ein Hydrauliköl oder Wasser.

Das Werkzeug umfasst ein im Halter angebrachtes kolbenartiges Stellorgan zur Druckbeaufschlagung der Druckkammer. Über dieses Stellorgan kann der rückseitig am Druckelement anliegende Druck verändert werden.

Die Druckkammer umfasst eine Durchgangsbohrung durch den Halter, in welche an einer ihrer Enden das kolbenartige Stellorgan eingesetzt ist.

Gemäß einer bevorzugten Ausführungsform erstreckt sich die Durchgangsbohrung im wesentlichen quer zur Erstreckungsrichtung der Ausnehmung durch den Halter.

Die Druckkammer umfasst ferner mindestens einen Verbindungskanal, der seitlich von der Durchgangsbohrung ausgeht und in einem flachen Winkel auf die Rückseite des Druckelements zuläuft. Durch die Anordnung des Druckelements relativ zum Verbindungskanal kann erreicht werden, dass das Druckelement in einer Schnittebene des Verbindungskanals liegt und diesen abschließt, so dass die gewünschte flächige Druckbeaufschlagung der Rückseite des Druckelements erreicht wird. Bei dieser Ausführungsform können auch mehrere parallele Verbindungskanäle nebeneinander vorgesehen sein, die an eine Durchgangsbohrung mit größerem Durchmesser angeschlossen sind.

Der Halter ist im wesentlichen prismatischer Körper ausgebildet, der an einem seiner Enden zwei Spannbacken aufweist, zwischen denen die schlitzförmige Ausnehmung gebildet ist und von denen wenigstens eine Spannbacke an ihrer Innenseite das Druckelement trägt, wobei die Durchgangsbohrung sich hinter der Ausnehmung quer durch den Halter erstreckt und der mindestens eine Verbindungskanal durch die das Druckelement tragende Spannbacke verläuft.

Vorzugsweise wird das dem kolbenartigen Stellorgan gegenüberliegende Ende der Durchgangsbohrung durch eine Einstellschraube zum Einstellen des Drucks in der Druckkammer verschlossen.

Gemäß einer Ausführungsform der vorliegenden Erfindung ist das Druckelement ein Metallblech.

Weiter vorzugsweise ist das Druckelement in diesem Fall druckdicht an die Druckkammer angeschweißt oder angelötet.

Gemäß einer weiteren bevorzugten Ausführungsform ist das Druckelement als druckdichte Membran ausgebildet. Diese kann auch aus einem anderen Material als Metall bestehen, beispielsweise aus einem geeigneten Kunststoff, und das Druckelement ist in diesem Fall durch Kleben in der Ausnehmung befestigt.

Gemäß einer weiteren bevorzugten Ausführungsform der Erfindung verlaufen die Wände der Ausnehmung parallel zueinander und weisen ein spiegelsymmetrisches Querschnittsprofil auf. Zwischen die parallelen Wände der schlitzförmigen Ausnehmung lässt sich der Schneideinsatz leicht einschieben und kann als Wendeschneidplatte ausgebildet sein. Das Querschnittsprofil der Wände ist vorteilhafterweise so ausgebildet, dass eine seitliche Verschiebung des Schneideinsatzes verhindert wird.

Im folgenden wird eine bevorzugte Ausführungsform der Erfindung anhand der Zeichnung näher erläutert.
- Fig. 1: ist eine Seitenansicht einer Ausführungsform eines erfindungsgemäßen Werkzeugs;
- Fig. 2: ist eine Draufsicht auf das Werkzeug aus Fig. 1,
- Fig. 3: ist ein Längsschnitt durch das Werkzeug aus den Fig. 1 und 2 entlang der Ebene C-C in Fig. 2;
- Fig. 4: ist eine vergrößerte Darstellung eines Teils D von Fig. 3;
- Fig. 5: ist ein Schnitt durch einen vorderen Bereich des Werkzeugs aus Fig. 1 entlang der Ebene A-A;
- Fig. 6: zeigt das Werkzeug aus den Fig. 1 bis 5 in einer perspektivischen schematischen Darstellung, in der der Verlauf der Bohrungen zur Bildung der Druckkammer angedeutet ist; und
- Fig. 7: ist eine vergrößerte Darstellung eines Teils G von Fig. 6.

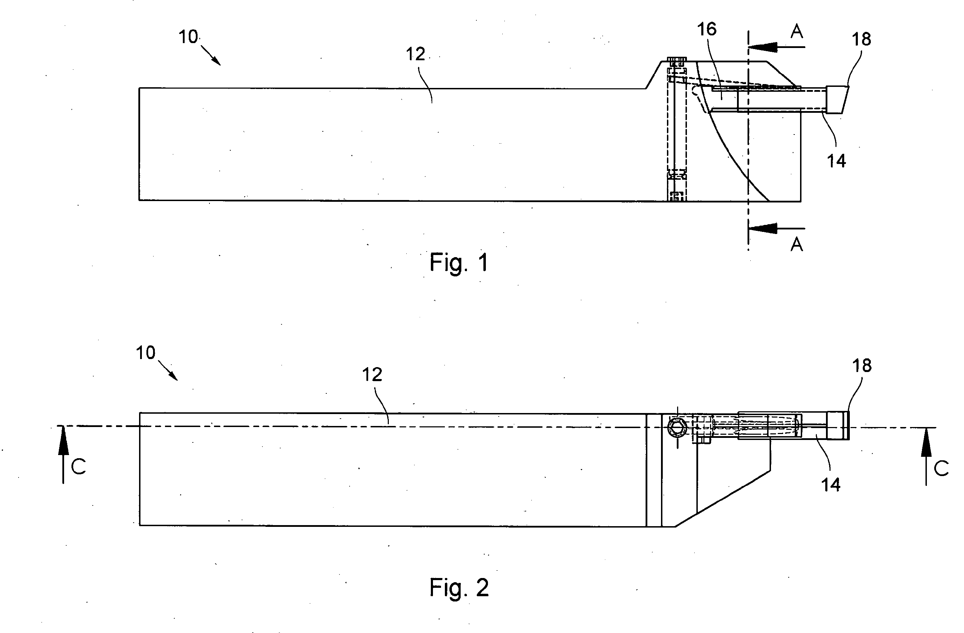

Fig. 1 zeigt ein Werkzeug 10 für die spanabhebende Werkstückbearbeitung, nämlich ein Drehwerkzeug zur Metallbearbeitung. Es umfasst einen Halter 12 und einen Schneideinsatz 14 am vorderen Ende des Halters 12, das in Fig. 1 rechts angeordnet ist. Der Halter 12 selbst ist ein im wesentlichen prismatischer Körper aus Metall zum Einsatz in eine nicht näher dargestellte Werkzeugmaschine. An seinem vorderen Ende weist der Halter eine schlitzförmige Ausnehmung 16 auf, die sich entlang der Hauptachse des Halters 12 erstreckt. Zum vorderen Ende hin ist die schlitzförmige Ausnehmung 16 offen zur Aufnahme des Schneideinsatzes 14, der vom vorderen Ende her in die Ausnehmung 16 eingesteckt oder eingeschoben werden kann.

Der Schneideinsatz 14 ist im vorliegenden Fall eine Wendeschneidplatte, an deren vorderem Ende eine Schneide 18 vorgesehen ist. Der Schneideinsatz kann aus einem keramischen Material oder aus Hartmetall hergestellt sein. Er ist auswechselbar in der Ausnehmung 16 angebracht und kann ausgetauscht werden, wenn er abgenutzt ist.

Wie im folgenden noch näher dargestellt werden soll, ist der Schneideinsatz 14 in die Ausnehmung 16 des Halters 12 eingespannt, so dass der Schneideinsatz 14 während der Werkstückbearbeitung sicher in einer definierten Position gehalten wird.

Fig. 2 zeigt das Werkzeug von oben in einer Draufsicht. Hier ist zu erkennen, dass das vordere Ende des Halters 12 eine erheblich geringere Breite aufweist als der übrige hintere Teil des Halters 12. In diesem vorderen Teil ist die Ausnehmung 16 angeordnet.

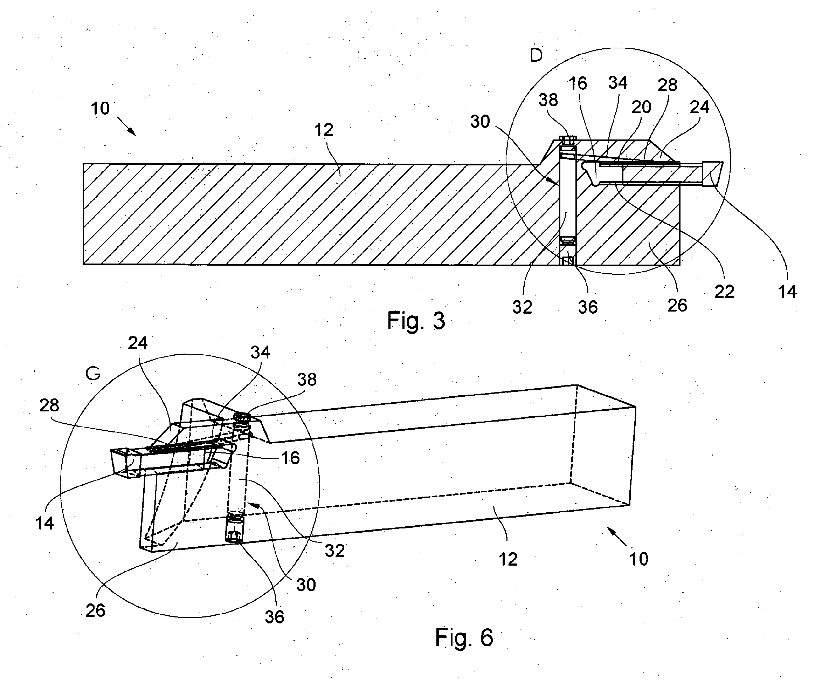

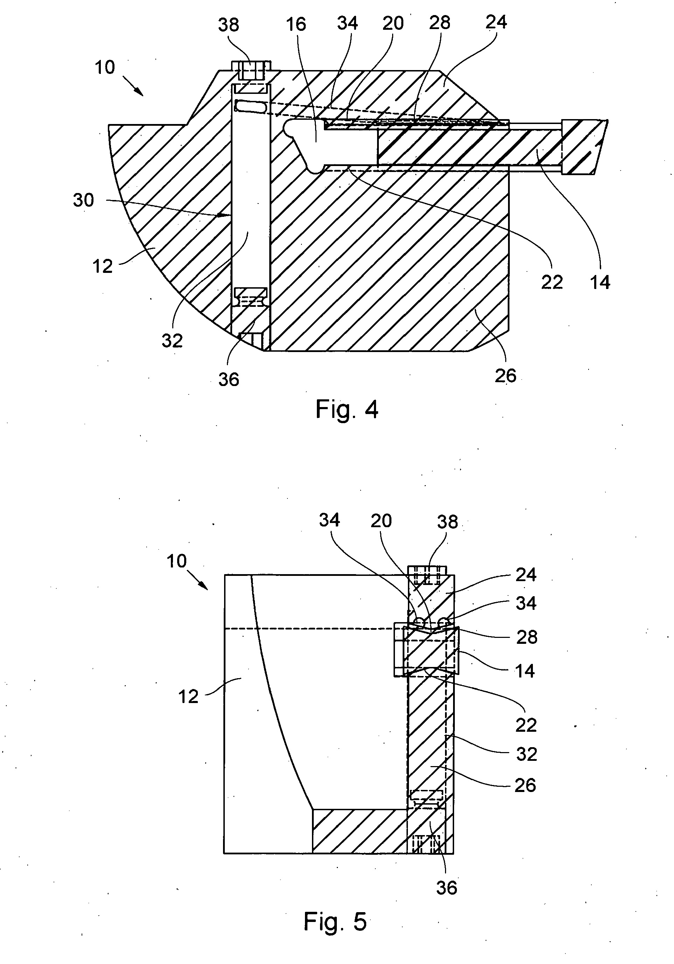

Fig. 3 zeigt einen Längsschnitt durch das Werkzeug 10, wobei die Schnittebene in Fig. 2 durch die strichpunktierte Linie C-C markiert ist. Der vordere Teil des Werkzeugs 10 ist wiederum in Fig. 4 vergrößert dargestellt.

Die schlitzförmige Ausnehmung 16 wird durch eine obere Wand 20 und gegenüberliegende untere Wand 22 begrenzt. Diese Wände 20, 22 verlaufen im wesentlichen parallel zueinander, d.h., der Schlitz der Ausnehmung 16 verjüngt oder erweitert sich nicht zum Grund der Ausnehmung 16 hin, sondern die Breite des Schlitzes bleibt über seine Länge hinweg gleich. Zwischen diesen Wänden 20, 22 liegt der Schneideinsatz 14 ein. Die Ausnehmung 16 teilt das vordere Ende des Halters 12 in einen oberen Teil und einen unteren Teil, die im folgenden als obere Spannbacke 24 und untere Spannbacke 26 bezeichnet werden sollen. Es sei hier angemerkt, dass die beiden Spannbacken 24, 26 selbst starr sind und für die Funktion der vorliegenden Erfindung keineswegs elastisch verformbar sein müssen.

Die obere dieser Spannbacken 24 trägt an ihrer Innenseite, die der unteren Spannbacke 24 zugewandt ist, ein Druckelement 28 in Form eines elastisch verformbaren Metallblechs, das flächig an Schneideinsatz 14 anliegt. Somit wird die Ausnehmung 16 nach oben hin teilweise durch das elastisch verformbare Druckelement 28 begrenzt. Dieses Druckelement 28 lässt sich durch ein Druckfluid wie etwa ein Hydrauliköl mit Druck beaufschlagen, so dass es sich nach unten in die Ausnehmung 16 hinein wölben kann und einen Flächendruck auf die Oberseite des Schneideinsatzes 14 ausübt. Wird das Druckelement 28 rückseitig mit Druck beaufschlagt, wird der Schneideinsatz 14 in die Ausnehmung 16 eingeklemmt und somit in den Halter 12 eingespannt.

Zur Druckbeaufschlagung ist im Halter 12 eine Druckkammer 30 angeordnet, die durch eine Durchgangsbohrung 32 und durch ein Paar paralleler Verbindungskanäle 34 gebildet wird, die den Querschnitt der Durchgangsbohrung 32 mit der freien Rückseite des Druckelements 28 verbinden. Die Durchgangsbohrung 32 erstreckt sich senkrecht unmittelbar hinter dem Ende der Ausnehmung 16 durch den Halter 12 hindurch und ist an der Oberseite und an der Unterseite des Halters 12 offen. Die Verbindungskanäle 34 gehen seitlich von der Durchgangsbohrung 32 in einer Position oberhalb der Ausnehmung 16 aus und verlaufen schräg nach unten auf die Ausnehmung 16 zu, so dass sie in die Innenseite der oberen Spannbacke 24 münden. Das Druckelement 28 ist so angeordnet, dass es die Enden der Verbindungskanäle 34 druckdicht verschließt, beispielsweise durch Anschweißen oder Anlöten des Metallblechs, welches das Druckelement 28 bildet, an die obere Spannbacke 24. Das flache Druckelement 28 liegt im wesentlichen in einer Ebene, die die Verbindungskanäle 34 in einem sehr flachen Winkel schneidet. Hierdurch wird die Rückseite des Druckelements 28 über einen relativ großen Flächenbereich mit Druck beaufschlagt.

In das untere Ende der Durchgangsbohrung 32 ist ein kolbenartiges Stellorgan 36 zur Druckbeaufschlagung der Druckkammer 30 eingesetzt, durch welches sich der Druck des in die Druckkammer 30 eingeleiteten Druckfluids verändern lässt. Bei der vorliegenden Ausführungsform ist das Stellorgan 36 als Kolben ausgebildet, der auf seiner Umfangsfläche ein Außengewinde aufweist, das in ein entsprechendes Innengewinde im Ende der Durchgangsbohrung 32 vollständig eingeschraubt ist, nach Art einer Madenschraube. Dem Stellorgan 36 entgegengesetzt ist im oberen Ende der Durchgangsbohrung 32 eine Einstellschraube 38 angeordnet. Sie dient zur Einstellung eines vorgegebenen Drucks in der Druckkammer 30. Während das kolbenartige Stellorgan 36 seinerseits bis zu einem Anschlag, d.h. bis zum Gewindeende in die untere Öffnung der Durchgangsbohrung 32 eingeschraubt wird, lässt sich der Druck, der rückseitig auf das Druckelement 28 wirkt, über die Einstellschraube 38 justieren.

Wie bereits beschrieben, wird durch eine Druckbeaufschlagung der Druckkammer 30 das Druckelement 28 nach unten gewölbt und übt einen Flächendruck auf den Schneideinsatz 14 aus, der zu einem Reibschluss zwischen dem Schneideinsatz 14 und dem Druckelement 28 führt und ein Herausziehen oder Verschieben des Schneideinsatzes 14 innerhalb der Ausnehmung 16 verhindert. Wird die Druckkammer 30 wieder entspannt, nimmt das Druckelement 28 wieder seine ursprüngliche Form ein und gibt den Schneideinsatz 14 frei. Die Spannbacken 24, 26 bleiben während dieses Einspannens und Freigebens starr und unbeweglich. Es müssen daher keine mechanischen Kräfte auf die Spannbacken 24, 26 selbst ausgeübt werden, wie es beim Stand der Technik der Fall ist. Zudem werden punktuelle Belastungen oder Überspannungen des Schneideinsatzes 14 oder der Spannbacken 24, 26 vermieden.

Fig. 5 zeigt das vordere Ende des Werkzeugs 10 nochmals im Querschnitt. Hier sind die Querschnittsprofile der Wände 20, 22 der Ausnehmung 16 erkennbar. Im Querschnitt laufen diese Wände 20, 22 zur Mitte der Ausnehmung 16 hin aufeinander zu, so dass sich eine leicht eingeschnürte Querschnittsform ergibt, in welcher die Ausnehmung 16 in ihrer Mitte schmaler ist als an den Außenwänden des vorderen Teils des Halters 12. Die Profile der Wände 20, 22 sind zueinander spiegelsymmetrisch bezüglich einer horizontalen Ebene in der Mitte der Ausnehmung 16. Es versteht sich, dass der Schneideinsatz 14 eine entsprechende Querschnittsform aufweist, die an die Wände 20, 22 angepasst ist, d.h. der Schneideinsatz 14 ist im Querschnitt in seiner Mitte etwas dünner als an seinen Außenseiten. Durch diese komplementäre Querschnittsform des Schneideinsatzes 14 und der die Ausnehmung 16 begrenzenden Wände 20, 22 wird eine seitliche Verschiebung des Schneideinsatzes 14 in der Ausnehmung 16 durch Formschluss verhindert.

Das Druckelement 28 ist nicht auf die hier vorgeschlagene Ausführungsform eines Metallblechs begrenzt. Es kann sich hierbei auch um eine folienartige druckdichte Membran handeln, beispielsweise aus einem Kunststoffmaterial, die an die Innenseite der Spannbacke 24 angeklebt ist. Es ist ferner möglich, ein entsprechendes Druckelement auf der gegenüberliegenden unteren Seite der Ausnehmung 16 auf der unteren Spannbacke 26 vorzusehen, so dass der Schneideinsatz von oben und von unten flächig mit Druck beaufschlagt werden kann.

Abweichend von der vorgestellten Ausführungsform kann der Schneideinsatz 14 selbst wiederum als ein Halter für eine Schneide zur spanabhebenden Werkstückbearbeitung ausgebildet sein.

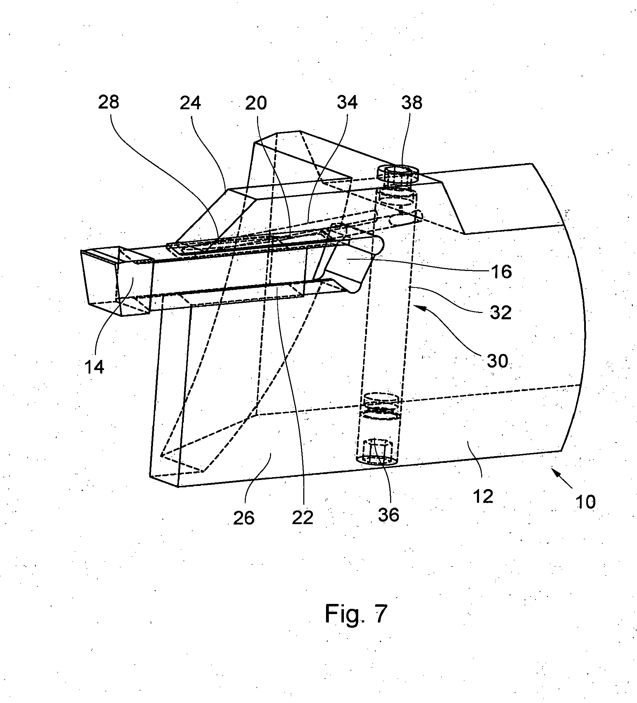

Fig. 6 und 7 zeigen nochmals den Verlauf der Durchgangsbohrung 32 und der Verbindungskanäle 34 zur Bildung der Druckkammer 30 im Halter 12. Wie bereits erwähnt, zeigt das Ausführungsbeispiel aus den Fig. 1 bis 7 ein Werkzeug für die spanabhebende Werkstückbearbeitung. Die vorliegende Erfindung ist jedoch keineswegs auf derartige Werkzeuge beschränkt. Vielmehr kann ein derartiges Werkzeug auch zur Bearbeitung anderer Werkstoffe geeignet sein, wie etwa zur Bearbeitung von Werkstücken aus Kunststoff, Holz oder dergleichen.

## Patentansprüche

1. Werkzeug (10), insbesondere für die spanabhebende Werkstückbearbeitung, mit einem Halter (12) und einem Schneideinsatz (14), der in eine im wesentlichen schlitzförmige Ausnehmung (16) im Halter (12) eingesetzt und darin eingespannt ist,
wobei die Ausnehmung (16) seitlich zumindest teilweise durch ein elastisch verformbares Druckelement (28) begrenzt wird, das flächig am Schneideinsatz (14) anliegt und rückseitig durch ein Druckfluid mit Druck beaufschlagbar ist,
und das Werkzeug (10) eine im Halter angeordnete Druckkammer (30) umfasst, die durch das Druckelement (28) von der Ausnehmung (16) getrennt ist und das Druckfluid enthält,
**gekennzeichnet durch** ein im Halter angebrachtes kolbenartiges Stellorgan (36) zur Druckbeaufschlagung der Druckkammer (30),
welche Druckkammer (30) eine Durchgangsbohrung (32) **durch** den Halter (12) umfasst, in welche an einer ihrer Enden das kolbenartige Stellorgan (36) eingesetzt ist, und mindestens einen Verbindungskanal (34), der seitlich von der Durchgangsbohrung (32) ausgeht und in einem flachen Winkel auf die Rückseite des Druckelements (28) zuläuft,
und dass der Halter (12) als im wesentlichen prismatischer Körper ausgebildet ist, der an einem seiner Enden zwei Spannbacken (24,26) aufweist, zwischen denen die schlitzförmige Ausnehmung (16) gebildet ist und von denen wenigstens eine Spannbacke (24) an ihrer Innenseite das Druckelement (28) trägt, wobei die Durchgangsbohrung (32) sich hinter der Ausnehmung (16) quer **durch** den Halter (12) erstreckt und der mindestens eine Verbindungskanal (34) **durch** die das Druckelement (28) tragende Spannbacke (24) verläuft.

2. Werkzeug gemäß Anspruch 1, **dadurch gekennzeichnet, dass** das dem kolbenartigen Stellorgan (36) gegenüber liegende Ende der Durchgangsbohrung (32) durch eine Einstellschraube (38) zum Einstellen des Drucks in der Druckkammer (30) verschlossen ist.

3. Werkzeug gemäß einem der vorhergehenden Ansprüche, **dadurch gekennzeichnet, dass** das Druckelement (28) ein Metallblech ist.

4. Werkzeug gemäß einem der vorhergehenden Ansprüche, **dadurch gekennzeichnet, dass** das Druckelement (28) druckdicht an die Druckkammer (30) angeschweißt oder angelötet ist.

5. Werkzeug gemäß einem der vorhergehenden Ansprüche, **dadurch gekennzeichnet, dass** das Druckelement (28) als druckdichte Membran ausgebildet ist.

6. Werkzeug gemäß einem der vorhergehenden Ansprüche, **dadurch gekennzeichnet, dass** die Wände (20,22) der Ausnehmung (16) parallel zueinander verlaufen und ein spiegelsymmetrisches Querschnittsprofil aufweisen.

## Claims

1. Tool (10), in particular for cutting work pieces, comprising a holder (12) and a cutting element (14) that is inserted into a generally slit-shaped reception (16) in the holder (12) and clamped therein,
wherein the reception (16) is delimited laterally at least partially by an elastically deformable pressure element (28) abutting in a planar fashion at the cutting element (14) and being pressurized at its rear side by a pressure fluid,
said tool (10) comprising a pressure chamber (30) within the holder that is separated by the pressure element (28) from the reception (16) and containing the pressure fluid,
**characterised by** a plunger-like control element (36) for pressurizing the pressure chamber (30),
said pressure chamber (30) comprising a through-hole bore (32) through the holder (12) into which the plunger-like control element (36) is inserted into one of its ends, and at least one connection passage (34) starting laterally from the through-hole bore (32) and running towards the rear side of the pressure element (28) in a flat angle,
and the holder (12) is a generally prismatic body comprising at one of its ends two clamping jaws (24, 26) between which the slit-shaped reception (16) is formed and of which at least one clamping jaw (24) comprises at its inner side the pressure element (28), wherein the through-hole bore (32) extends behind the reception (16) through the holder (12) in a traverse direction, and the at least one connection passage (34) runs through the clamping jaw (24) carrying the pressure element (28).

2. Tool according to claim 1, **characterised in that** the end of the through-hole bore (32) opposite to the plunger-like control element (36) is closed by an adjustment screw (38) for adjusting the pressure within the pressure chamber (30).

3. Tool according to one of the preceding claims, **characterised in that** the pressure element (28) is a metal sheet.

4. Tool according to one of the preceding claims, **characterised in that** the pressure element (28) is brazed or welded to the pressure chamber (30) in a pressure-tight manner.

5. Tool according to one of the preceding claims, **characterised in that** the pressure element (28) is provided as a pressure-tight membrane.

6. Tool according to one of the preceding claims, **characterised in that** the walls (20, 22) of the reception (16) run parallel towards another and comprise a mirror symmetric cross section profile.

## Revendications

1. Outil (10), en particulier pour l'usinage de pièces par enlèvement de copeaux, comportant un support (12) et un insert de coupe (14) qui est inséré dans le support (12) dans un évidement sensiblement en forme de fente (16) et qui est serré dans celui-ci,
dans lequel l'évidement (16) est délimité latéralement au moins en partie par un élément de pression élastiquement déformable (28) qui s'applique de manière plane sur l'insert de coupe (14) et sur lequel une pression peut être appliquée à l'arrière par un fluide mis sous pression,
et l'outil (10) inclut une chambre de pression (30) agencée dans le support, qui est séparée de l'évidement (16) par l'élément de pression (28) et qui contient le fluide mis sous pression,
**caractérisé par** un organe de réglage (36) analogue à un piston et fixé dans le support, destiné à appliquer une pression à la chambre de pression,
laquelle chambre de pression (30) inclut un alésage traversant (32) à travers le support (12), à l'une des extrémités duquel est inséré l'organe de réglage (36) analogue à un piston, et au moins un canal de liaison (34) qui se termine latéralement par l'alésage traversant (32) et qui débute sous un angle plat par le côté arrière de l'élément de pression (28),
et en ce que le support (12) est formé comme un corps sensiblement prismatique qui comporte, à l'une de ses extrémités, deux mors de serrage (24, 26) entre lesquels l'évidement en forme de fente (16) est formé et à partir desquels au moins un mors de serrage (24) supporte l'élément de pression (28) sur son côté intérieur, dans lequel l'alésage traversant (32) s'étend transversalement à travers le support (12) derrière l'évidement (16) et le au moins un canal de liaison (34) passe à travers le mors de serrage (24) supportant l'élément de pression (28).

2. Outil selon la revendication 1, **caractérisé en ce que** l'extrémité de l'alésage traversant (32) située à l'opposé de l'organe de réglage (36) analogue à un piston est fermée par une vis de réglage (38) de manière à régler la pression dans la chambre de pression (30).

3. Outil selon l'une des revendications précédentes, **caractérisé en ce que** l'élément de pression (28) est une tôle métallique.

4. Outil selon l'une des revendications précédentes, **caractérisé en ce que** l'élément de pression (28) est soudé ou brasé sur la chambre de pression (30) de manière étanche à la pression.

5. Outil selon l'une des revendications précédentes, **caractérisé en ce que** l'élément de pression (28) est formé comme une membrane étanche à la pression.

6. Outil selon l'une des revendications précédentes, **caractérisé en ce que** les parois (20, 22) de l'évidement (16) s'étendent parallèlement l'une à l'autre et ont un profil symétrique en coupe transversale.
